(19) **Europäisches Patentamt**
**European Patent Office**
**Office européen des brevets**

(11) **EP 2 834 132 B1**

(12) **EUROPEAN PATENT SPECIFICATION**

(45) Date of publication and mention
of the grant of the patent:
**18.09.2019 Bulletin 2019/38**

(21) Application number: **13772139.5**

(22) Date of filing: **14.03.2013**

(51) Int Cl.:
**B62D 5/04** (2006.01)     **B62D 5/00** (2006.01)
**B62D 6/00** (2006.01)     **B62D 6/02** (2006.01)

(86) International application number:
**PCT/US2013/031266**

(87) International publication number:
**WO 2013/151714 (10.10.2013 Gazette 2013/41)**

(54) **SYSTEM AND METHOD FOR WHEEL DISTURBANCE ORDER DETECTION AND CORRECTION**

SYSTEM UND VERFAHREN ZUR ERKENNUNG UND KORREKTUR VON STÖRUNGEN EINER RADFUNKTION

SYSTÈME ET PROCÉDÉ DE DÉTECTION ET DE CORRECTION D'ORDRE DE PERTURBATION DE ROUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2012 US 201261620613 P**

(43) Date of publication of application:
**11.02.2015 Bulletin 2015/07**

(73) Proprietor: **ZF Active Safety and Electronics US LLC**
**Livonia, MI 48150 (US)**

(72) Inventors:
• **SUKARIA, Husein**
**Dearborn, MI 48124 (US)**
• **SPIEKER, Arnold, H.**
**Commerce Twp., MI 48382 (US)**

• **DIBBEN, George, T.**
**Glenfield**
**Leicester LE3 8BE (GB)**

(74) Representative: **Prinz & Partner mbB**
**Patent- und Rechtsanwälte**
**Rundfunkplatz 2**
**80335 München (DE)**

(56) References cited:
**EP-A1- 2 030 868     EP-A1- 2 594 460**
**EP-A2- 2 221 235     EP-A2- 2 402 234**
**WO-A1-2006/099483     WO-A2-2006/134438**
**DE-A1-102010 031 211     JP-A- 2003 170 855**
**JP-A- 2007 237 880     JP-A- 2007 237 880**
**US-A- 5 029 660     US-A- 5 919 241**
**US-A1- 2009 125 186     US-A1- 2009 125 186**

EP 2 834 132 B1

**Description**

Background Of The Invention

This invention relates in general to electric power steering systems and in particular to an apparatus and method of filtering to remove undesirable vibrations in electric power steering systems.

One such undesired vibration is often referred to as "steering wheel nibble or judder," which is a vibration experienced by a vehicle driver at the steering wheel. Steering wheel nibble mainly occurs during straight line driving. In some vehicles, steering wheel nibble is the result of the chassis system responding to the tire and wheel force variations due to wheel imbalance, which eventually feed back in the form of slight rotations in the steering system that are then transmitted to the steering wheel. In many vehicles, steering wheel nibble is caused by the presence of a front road wheel imbalance or front tire force variation. Steering wheel vibrations typically occur at a frequency of one times the rotational velocities of the front road wheels and, thus, are termed a first order disturbance. The magnitude of the vibrations is maximized when these frequencies align with the steering/suspension resonant frequency, which is typically within a range of 10 Hz to 20 Hz.

Another undesired vibration is often referred to as "brake judder." Brake judder is due to unequal wear of the brake disks, which leads to thickness variations of the brake disk. This disk thickness variations produce a harmonic modulation of the braking force during braking. The oscillations of the braking force, in turn, excite different modes of the wheel suspension, the vibrations being transmitted via a kinematic coupling to the steering system and, in particular, to the steering rod if they lie in a specific critical frequency range. These vibration excite an oscillation of the steering gear and, as a result, the steering wheel. Steering wheel vibrations caused by brake judder typically occur at a frequency of one times or two times the rotational velocities of the front road wheels and, thus, are termed a second order imbalance.

Steering wheel nibble and brake judder are customer concerns in many production automobiles. Original equipment manufacturers and their suppliers are investigating chassis modifications to address and reduce nibble and judder. However, these modifications can have negative effects on other vehicle characteristics and are typically expensive to implement.

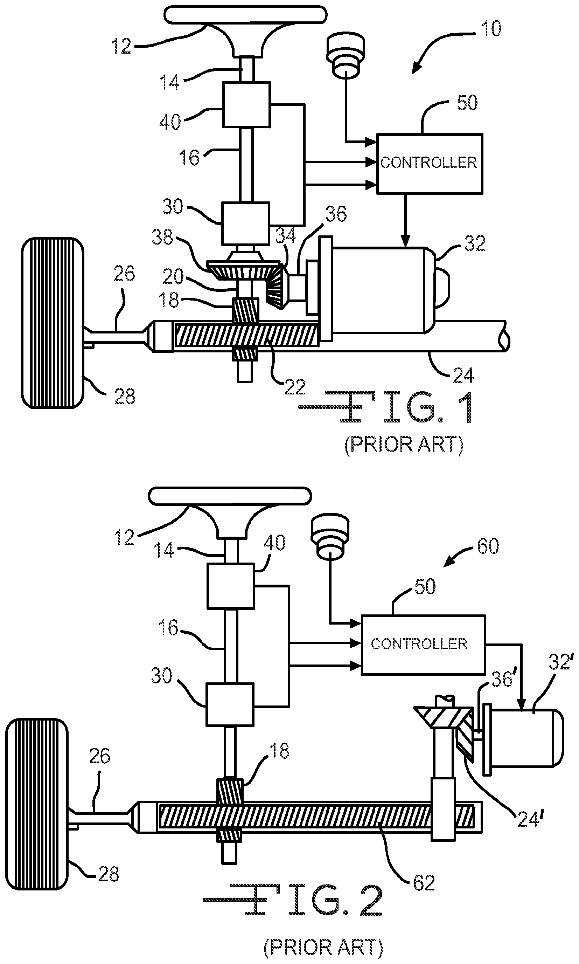

Referring now to the drawings, there is illustrated in Fig. 1 an electrically assisted power steering system, indicated generally at 10, in accordance with the prior art that includes a steering wheel 12 attached to a first end 14 of a steering shaft 16. A steering pinion gear 18, attached to a second end 20 of the steering shaft 16, engages a steering rack gear 22 of a steering rack 24. Each end of the steering rack 24 (only one is illustrated) includes a tie rod 26 that is attached to a steerable wheel and tire assembly 28 in a conventional manner. A steering torque sensor 30 is incorporated in the steering shaft 16 for detecting a steering torque applied by an operator to the steering shaft 16 by way of the steering wheel 12. A steering wheel angle sensor 40 senses a steering wheel angle. An electric motor 32 includes an output gear 34 mounted on an output shaft 36 for drivingly engaging an assist input gear 38 mounted on the steering shaft 16. A controller 50 receives signals representative of the torque of the steering shaft 16 between sensors 30 and 40.

An alternative prior art electrically assisted power steering system, indicated generally at 60, is shown in Fig. 2, where similar components have the same numerical designators. As shown in Fig. 2, the electric motor 32 may have its output shaft 36 and output gear 34 arranged to directly engage a steering rack 62.

In either of the prior art systems illustrated in Figs. 1 and 2, the electric motor 32 may be a either a brushed or brushless DC motor. Alternately, the electric motor 32 may be a three-phase alternating current induction motor or a variable reluctance motor. Induction and variable reluctance motors are typically used in electrically assisted power steering systems because of their low friction and high torque-to-inertia ratio compared to larger electric motors.

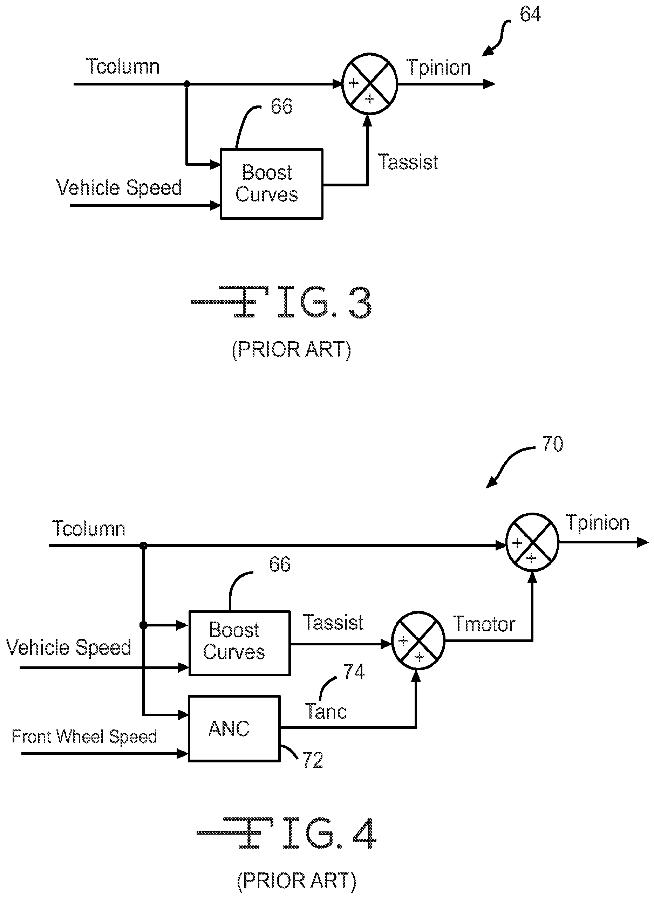

Fig. 3 is a block diagram of a prior art electric power steering system, indicated generally at 64, such as shown at 10 in Fig. 1 or at 60 in Fig. 2, where vehicle speed and steering column torque ($T_{column}$) signals are used, along with boost curves 66, to determine an amount of assist torque ($T_{assist}$) to be generated to aid the driver in steering the vehicle. The assist torque $T_{assist}$ is carried out by the electric motor 32 shown in Figs. 1 and 2.

It is known to use an electric power steering system as an actuator to actively cancel steering wheel nibble and brake judder by creating a digitally-realized tuned resonator at the vehicle speed-dependent nibble and/or brake judder frequencies. The output of the tuned resonator is fed back to the controller (see Figs. 1 or 2) as an additional assist force to the electric power steering rack to cancel the vibrations before they reach the steering wheel.

As described above, steering wheel nibble typically occurs at one times the rotational velocities of the front road wheels, while brake judder typically occurs at one times or two times the rotational velocities of the front road wheels. The vibration is most prevalent when these frequencies align with the steering/suspension resonant frequency, which is typically 10 to 20 Hz. A first non-claimed embodiment provides a very narrow rejection of frequencies using a software-generated tuned resonator that dynamically adapts the frequency of the tuned resonator with front wheel speeds. If front wheel speeds are unavailable, the non-claimed embodiment utilizes the vehicle speed. The precise tuning of the resonator provides the benefit of targeting the specific frequency to be rejected without exciting disturbances at other frequencies. However, when a filtering compensator or resonator scheme is used to reduce the disturbance transmission, the type of disturbance needs to be defined in order to apply the correct compensation. This is typically done by defining vehicle/wheel speed ranges for first and second order disturbances and defining them so that they do not overlap. A limitation of this approach is that if a second order disturbance can be felt at the same speed as a first order disturbance, then one or the other must be ignored based solely on a predefined condition map.

Referring to FIG. 4, there is illustrated a block diagram of a non-claimed of an electric power steering system, indicated generally at 70, that includes an Active Nibble Control (ANC) algorithm 72 operative to detect and identify the magnitude of steering wheel nibble and add a nibble canceling torque 74 at the electric motor of the steering system. The ANC algorithm 72 calculates front wheel frequencies, tuned resonator coefficients, steering nibble signal, and the steering nibble canceling torque.

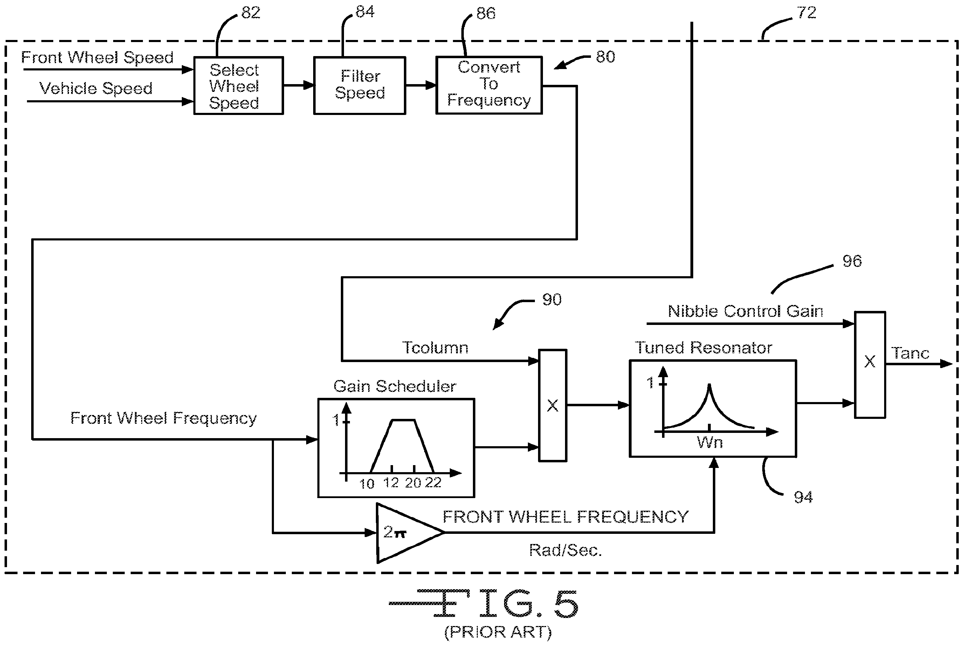

A block diagram of a known ANC algorithm 72 is shown in Fig. 5. To calculate the front wheel frequencies, the ANC algorithm can use one or both front wheel speed signals available from a central vehicle communication controller (not shown) of the vehicle. The left portion of Fig. 5 labeled at 80 illustrates the calculation of front wheel frequencies. One of the front wheel speed signals is selected in box 82. As an alternative, the average of both front wheel speeds (not shown) may be used. In the absence of wheel speed signals, a vehicle speed signal (not shown) may be used. The speed signals are supplied to the right portion of Fig. 5 that is labeled 90, where they provide a resonant frequency $W_n$ for a resonant filter 94. As shown in Fig. 5, steering column torque is scaled by a gain scheduler 92, then input to the resonant filter 94. Thus, the resulting output nibble signal from the resonant filter 84 completely matches the nibble that the vehicle driver is experiencing at the steering wheel. The nibble signal is multiplied by a nibble control gain 96 to generate a steering nibble canceling torque $T_{anc}$.

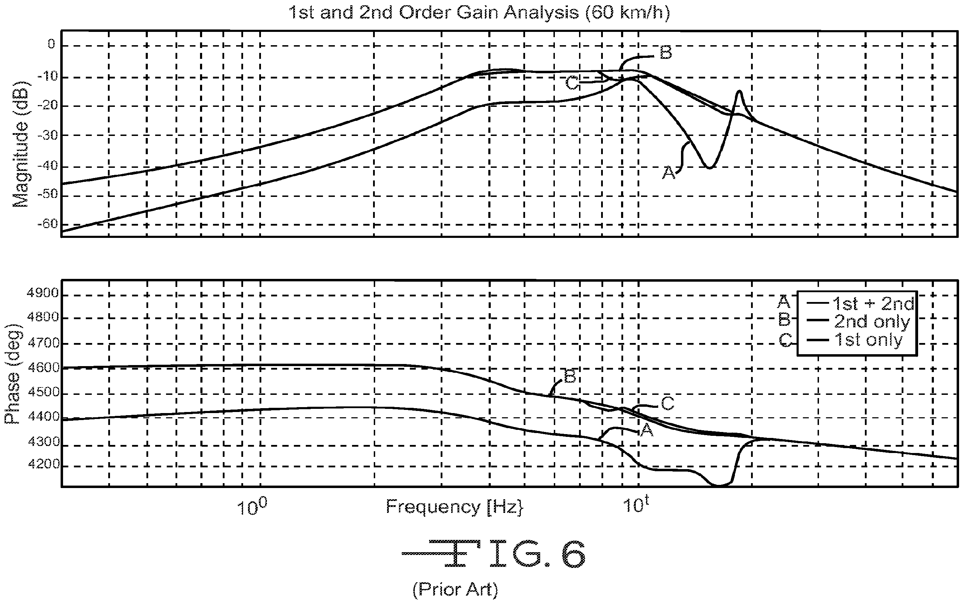

A steering system with such a prior art resonator filter was coded and analyzed in simulation, with the results shown in Fig. 6. The upper set of curves represent filter gain as a function of frequency, while the lower set of curves represent filter phase as a function of frequency. In Fig. 6, the curves labeled A represent a filter for the rejection of both first and second order disturbances, while the curves labeled B and C represent filters for the rejection of only second order disturbances and first order disturbances, respectively. As shown in the curves, instability may result when both first and second order disturbances are present.

As mentioned earlier, the overlap issue is typically resolved by not allowing the first and second order compensation schemes to have output demands at the same vehicle/wheel speed. It is possible to calculate the both the first and second compensation demands, then select the compensation scheme order based on the magnitude of the output.

It may also be advantageous to include some hysteresis to keep the algorithm from toggling back and forth between the two orders. One approach would be to define a minimum time for the system to be in one mode. This defines the selection of the disturbance order to be based on the presence of the particular disturbance, rather than just a typical speed range.

It is noted that above approach defines the selection of the disturbance order to be based on the presence of the particular disturbance, rather than just a typical speed range.

Based upon the above analysis, an ANC resonator filter that includes a constant peak gain resonator would have the following form:

$$H(z) = [\,(\,1 - R\,) * (1 - z^{-2}\,)\,]/[\,1 - 2R\cos\theta z^{-1} + R^2 z^{-2}\,],$$

where:

H(z) is the resonant filter transfer function,

θ = the front wheel speed determined in box 82 in Fig. 5, and

R = the damping factor for the resonator.

This resonator filter design allows the resonator frequency to be set to match either the first order wheel disturbance (that is, wheel imbalance) or the second order wheel disturbance (that is, brake pulsation) by making θ equal to either one times the wheel speed frequency or two times the wheel speed frequency. The output of the resonator filter is added to the demand torque to cancel the nibble in the column torque, as illustrated in Fig. 4.

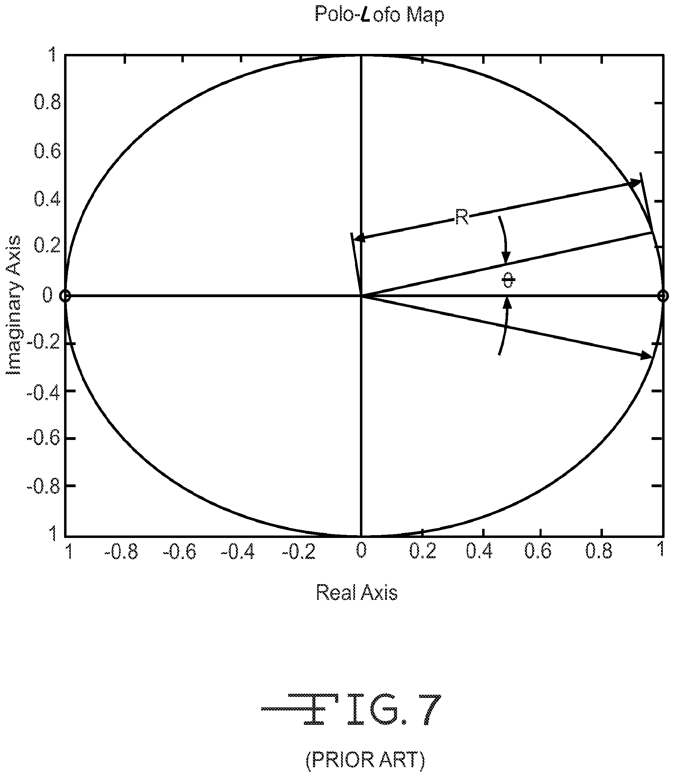

By making θ a function of the wheel speed, the above ANC resonator filter is adaptive to the wheel frequency. The peaks of the resonator filter occur at the wheel frequency and are used to cancel the disturbance in the column torque due to front wheel imbalance. The transfer function for the ANC resonator filter transfer function also can be represented as poles and zeros, as shown in Fig. 7 in Bode plot format, where:

R = 0.98 (approximate and tunable)
Zeros = -1,1

$$Poles = R * cos(\theta) \pm R * sin(\theta) * i$$

Steady State Gain 1 - R

$$\theta = Nibble\ Order * 2 * Pi * Sample\ Rate * Wheel\ Frequency\ (in\ Hz).$$

The benefit of using a resonator filter is that the magnitude of the peaks at the resonances is constant (0 dB).

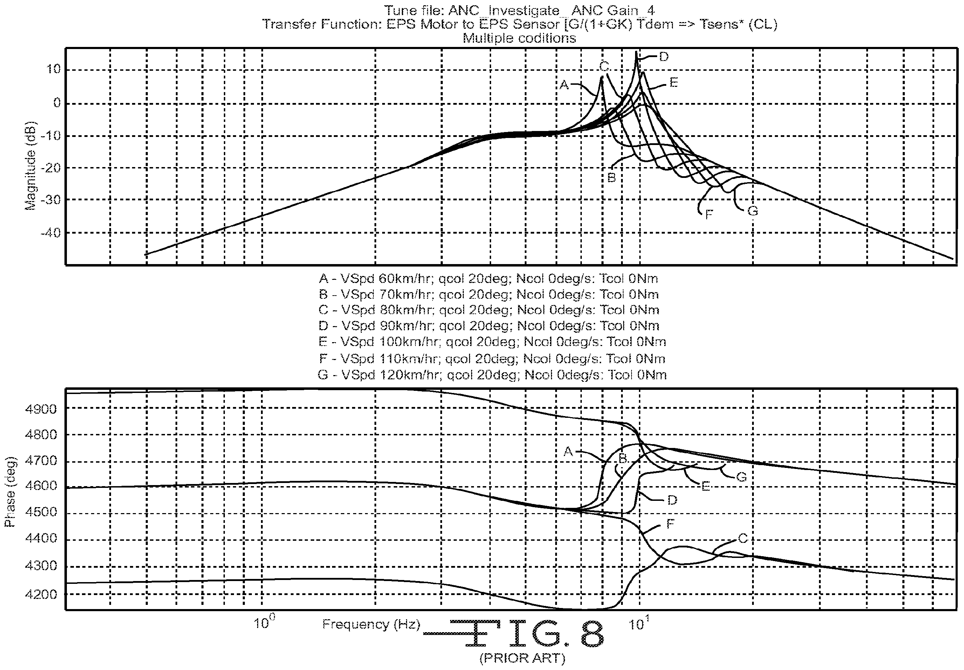

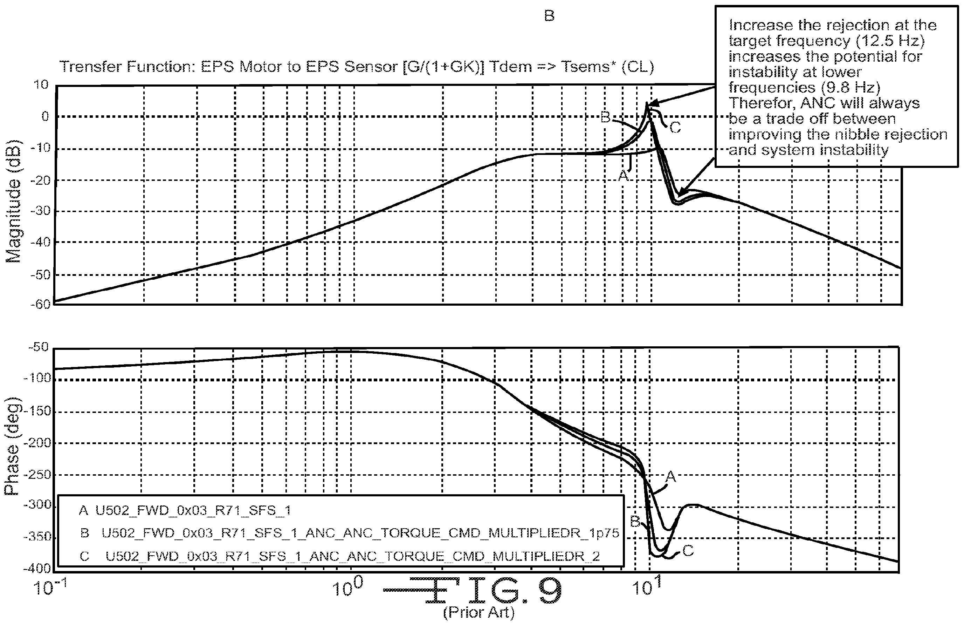

The resonant filter described above was coded and analyzed in a steering system simulation with the resulting closed loop frequency responses shown in Fig. 8, where the upper set of curves represent steering system gain as a function of frequency and the lower curves represent steering system phase as a function of frequency. As indicated by the curves of Fig. 8, the utilized resonant filter design demonstrated a potential for instability at frequencies below the disturbance frequency when high gain levels are used. Fig. 8 also illustrates the degradation of stability occurring where the magnitude of the closed loop frequency response is amplified (peaks). A corresponding jump in phase lead occurs during the amplification of the magnitude in the closed loop response of the steering system. Fig. 9 illustrates the influence of increasing ANC gain and, therefore, disturbance rejection on potential instability in the steering system. Thus, the use of a resonant filter requires a careful definition of ANC gains during vehicle development and can limit the rejection capability of the ANC feature. This can prove to be both difficult and very time consuming, adding to the cost of the system. Therefore, there is a need to detect and actively control steering wheel nibble and brake judder in an electric steering system without affecting steering feel, while also reducing steering wheel nibble related warranty costs. A method for actively canceling steering wheel nibble in an electric power steering system is for example shown in EP 2 030 868 A1. In this method, an electric motor in the electric power steering system is used to apply an active nibble canceling torque to eliminate steering wheel nibble. A corresponding system also is shown in EP 2 030 868 A1, which is considered the closest prior art document and discloses all of the features of the preamble of claim 2.

Document WO 2006/099483 discloses an apparatus as well as a method for controlling a steering assist system that includes a torque sensing system operatively connected to a vehicle hand wheel for providing a torque signal indicative of an applied steering torque. A road feel filter is provided which filters lag-lead from an adaptive torque signal for allowing road feel to be transmitted through the hand wheel at substantially zero gain.

Summary Of The Invention

This invention relates to an apparatus and method for filtering to remove undesirable vibrations in electric power steering systems.

The invention contemplates a method for actively canceling steering wheel nibble in an electric power steering system that includes calculating an active nibble-canceling torque based upon a detected wheel speed. The method also uses an electric motor in the electric power steering system as an actuator to apply the nibble-canceling torque to eliminate the nibble. Furthermore, the step of calculating an active nibble canceling torque includes filtering a wheel speed with a digital filter. The digital filter is an anti-notch filter. To further enhance performance, a lag-lead compensation filter is connected to the output of the anti-notch filer, connected between the anti-notch filter and a multiplication block , for adding more phase lag to an ADR dynamic response in order to reduce amplification of a closed loop magnitude of the steering system, wherein the phase lag is induced ahead of wheel frequency resonant peaks in order to accumulate enough phase lag as the anti-notch filter reaches wheel frequency peaks, wherein the lag-lead compensator filter is operative as a function of wheel frequency and a damping factor, wherein the phase lag is modified without causing pole-zero cancelation, wherein poles of the lag-lead compensator filter are shifted to a lower frequency by adding a gain multiplier to initiate the phase lag ahead of the wheel frequencies..

The invention also contemplates a system for actively canceling steering wheel vibrations in an electric power steering system that includes an electric motor adapted to provide torque moving the steering system of a vehicle in an intended direction and a controller for controlling the electric motor. The controller is adapted to receive sensor signals from the vehicle and to generate a control signal to cause the electric motor to generate a steering assistance torque. Furthermore, a digital filter is included in the controller, with the digital filter being operative to generate a wheel vibration canceling signal based upon a detected wheel speed that causes the electric motor to generate a vibration canceling torque. The digital filter is an anti-notch filter, which filters the detected wheel speed.

To further enhance performance, a lag-lead compensation filter is connected to the output of the anti-notch filer, connected between the anti-notch filter and a multiplication block, for adding more phase lag to an ADR dynamic response in order to reduce amplification of a closed loop magnitude of the steering system, wherein the phase lag is induced ahead of wheel frequency resonant peaks in order to accumulate enough phase lag as the anti-notch filter reaches wheel frequency peaks, wherein the lag-lead compensator filter is operative as a function of wheel frequency and a damping factor, wherein the phase lag is modified without causing pole-zero cancellation , wherein poles of the lag-lead compensator filter are shifted to a lower frequency by adding a gain multiplier (K) to initiate the phase lag ahead of the wheel frequencies.

Various objects and advantages of this invention as defined in the apended claims will become apparent to those skilled in the art from the following detailed description of the preferred embodiments, when read in light of the accompanying drawings.

Brief Description Of The Drawings

Fig. 1 is a schematic diagram of a first prior art electric power steering system.
Fig. 2 is a schematic diagram of a second prior art electric power steering system.
Fig. 3 is a block diagram of the steering systems shown in Figs. 1 and 2 that illustrates the torques present therein.
Fig. 4 is a block diagram of the steering systems shown in Figs. 1 and 2.
Fig. 5 is a block diagram of the Anti-Nibble Control (ANC) shown in Fig. 4.
Fig. 6 illustrates the transfer function of the resonator filter used in Fig. 5 for correcting first and second order disturbances.
Fig. 7 illustrates the transfer function of the resonator filter shown in Fig. 6 in a Bode plot format.
Fig. 8 illustrates the closed loop frequency response of the steering system shown by the block diagram in Fig. 4 that includes the resonator filter shown in Fig. 6.
Fig. 9 is illustrates the influence of increasing ANC gain in a prior art system.
Fig. 10 is a block diagram of an electric power steering system.
Fig. 11 is a block diagram of an Active Disturbance Rejection (ADR) control that is shown in Fig. 10.
Fig. 12 illustrates a closed loop frequency response of the steering system shown by the block diagram in Fig. 11.
Fig. 13 illustrates the addition of lag-lead phase compensation to the anti-notch filter shown in Fig. 8.
Fig. 14 illustrates a closed loop frequency response of the steering system shown by the block diagram in Fig. 4 that includes that includes combination of the anti-notch filter shown in Fig. 9 with the lag-lead phase compensation filter shown in Fig. 12.
Fig. 15 illustrates the addition of lag-lead phase compensation to the resonant filter shown in Fig. 5.
Fig. 16 is a comparison of closed loop frequency responses.
Fig. 17 illustrates how the filter rejection frequency varies with vehicle speed for both ANC and ADR designs.
Fig. 18 illustrates an overall transfer function of a steering system equipped with ADR from the steering sensor to the steering assist motor.
Fig. 19 illustrates a entire transfer function of a steering system equipped with ADR at various vehicle speeds.

Detailed Description Of The PREFERRED EMBODIMENTS

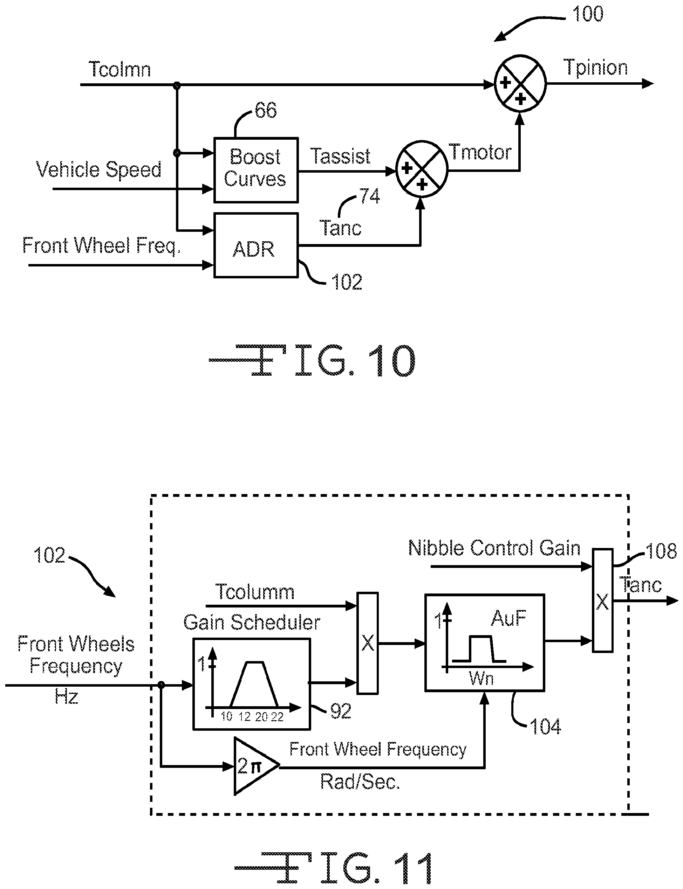

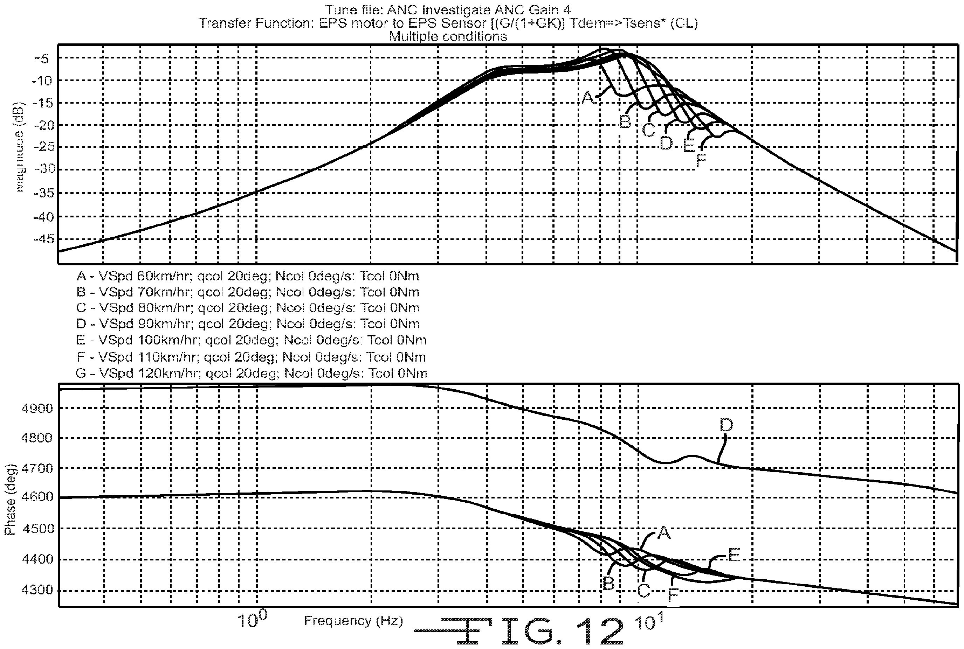

Because a resonator filter can potentially cause instability in the closed loop response of the steering system when the ANC gains are too large, this invention replaces the prior art resonator filter with an anti-notch filter that increases the gain margin and, therefore, provides greater disturbance rejection. A non-claimed embodiment is illustrated in Figs. 10 and 11, where components that are similar to components shown in Figs. 4 and 5 have the same numerical identifiers. Fig. 10 illustrates a steering system 100 that includes part of present invention, while Fig. 11 illustrates an Active Disturbance Rejection (ADR) control 102 that is included in the steering system 100 in lieu of the prior art ANC 72. As shown in Fig. 11, the prior art resonant filter 84 shown in Fig. 5 has been replaced by an anti-notch filter 104. Additionally, the front wheel frequency is supplied directly as an input to the ADR 102, thus eliminating the conversion of wheel speeds to frequency as was shown at 90 in Fig. 5. As before, the input wheel frequency may be selected from one of the front wheels or may represent an average to the two front wheel speeds. The replacement of the resonator filter 84 with the anti-notch filter 104 results in the movement of the filter zeros from -1 and 1 to a location on the real axis that will increase the gain margin, while the steady state gain and the poles remain the same as the original existing resonator filter 84. However, a disadvantage of the anti-notch filter 104 is that the magnitude of the resonant peaks is not constant, but decreases with the increase in wheel frequency, as can be seen in the lower set of curves shown in Fig. 12. Magnitude compensation could be increased by either increasing the existing ADR gains external to the filters or shifting the position of the zeros as a function of the wheel frequency.

**EP 2 834 132 B1**

Fig. 12 shows the overall closed loop transfer function of the steering system 100 with the anti-notch filter 104 replacing the resonator filter shown previously. In Fig. 12, the upper set of curves represent filter gain as a function of frequency and the lower curves represent filter phase as a function of frequency. Stability of the closed loop response is maintained since the phase angle of the anti-notch filter is lower as compared to the results obtained with the use of the resonator filter 84 in the prior art ANC design, as shown in Fig. 8.

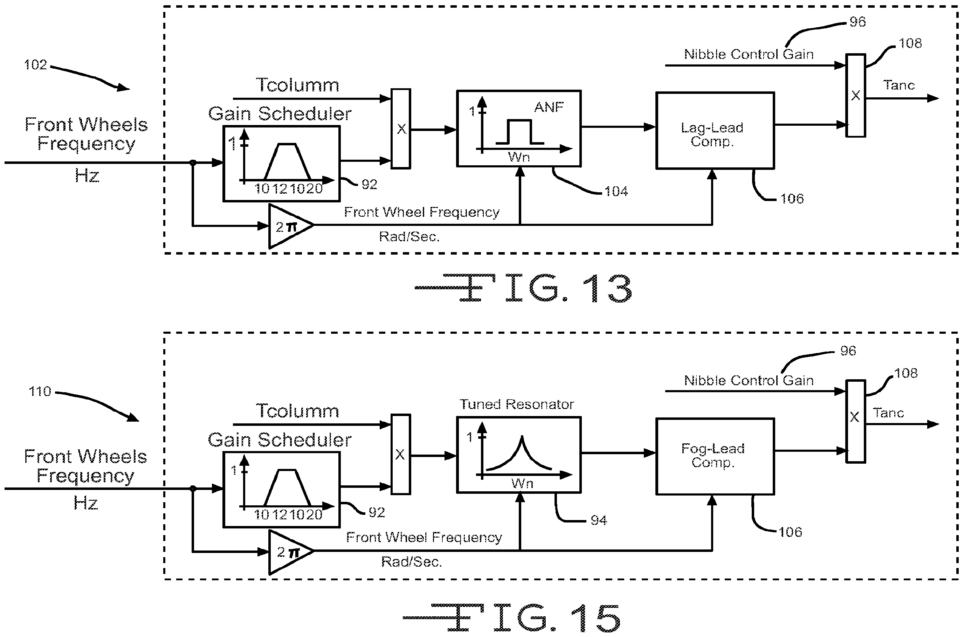

In order to further enhance the closed loop frequency response of the steering system 100, the invention in the claimed embodiment includes a lag-lead phase compensator filter 106 is concatenated to the anti-notch filter 104, as shown in Fig. 13, connected between the anti-notch filter 104 and the multiplication block 108. The intent of the lag-lead filter 106 is to add more phase lag to the ADR dynamic response in order to reduce amplification of the closed loop magnitude of the steering system 100, the need of which is evident in Fig. 12 from 7 Hz to 10 Hz.

The phase lag is induced ahead of the wheel frequency resonant peaks in order to accumulate enough phase lag as the filter reaches the wheel frequency peaks. This is achieved by designing the lag-lead compensation filter to be a function of wheel frequency and damping factor similar to the resonator and anti-notch filters. The intent is to modify the phase lag, but not to cause pole-zero cancelation. The poles of the compensator filter are shifted to a lower frequency by adding a gain multiplier (K) to initiate the phase lag ahead of the wheel frequencies.

It has been found that the peak magnitudes of the combined filters remain approximately similar to the magnitudes of the anti-notch filter by itself, but that the phase plots have increased lag with the lag-lead compensator filter added to the anti-notch filter.

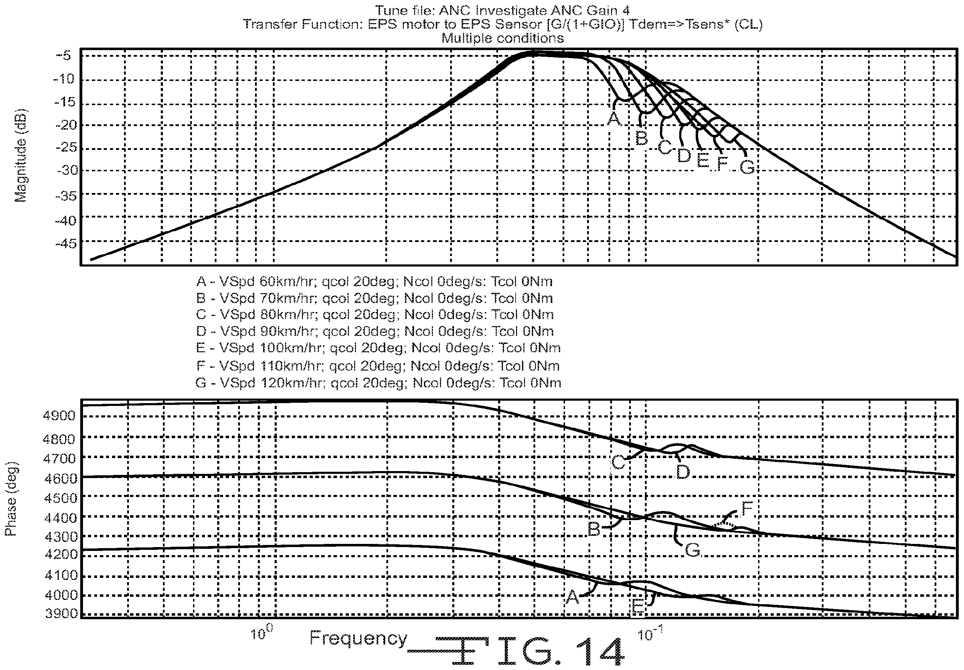

The combined anti-notch filter and lag-lead compensator closed loop frequency response is shown in Fig. 14. The existing ADR gains are modified from the baseline settings to further increase the ADR gains at higher wheel frequencies. Also, it is noted that the magnitudes for all wheel frequencies are fairly similar in the range of 3 Hz to 5 Hz, providing consistent steering feel.

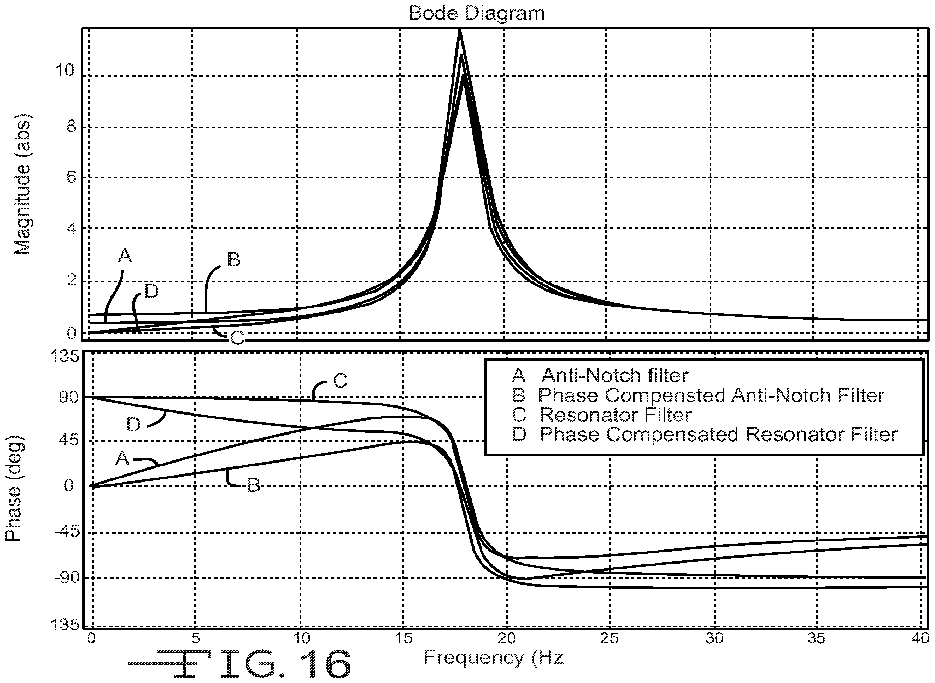

Closed loop frequency responses for the other two non-claimed embodiments of the invention described above and the prior art use of only a resonator filter are also shown in Fig. 16 for comparison where:

the curves labeled A represent an anti-notch filter, as shown in Figs. 10 and 11;
the curves labeled B represent a phase compensated anti-notch filter, as shown in Fig. 13; and
the curves labeled C represent a prior art resonator filter, as shown in Figs. 4 and 5.

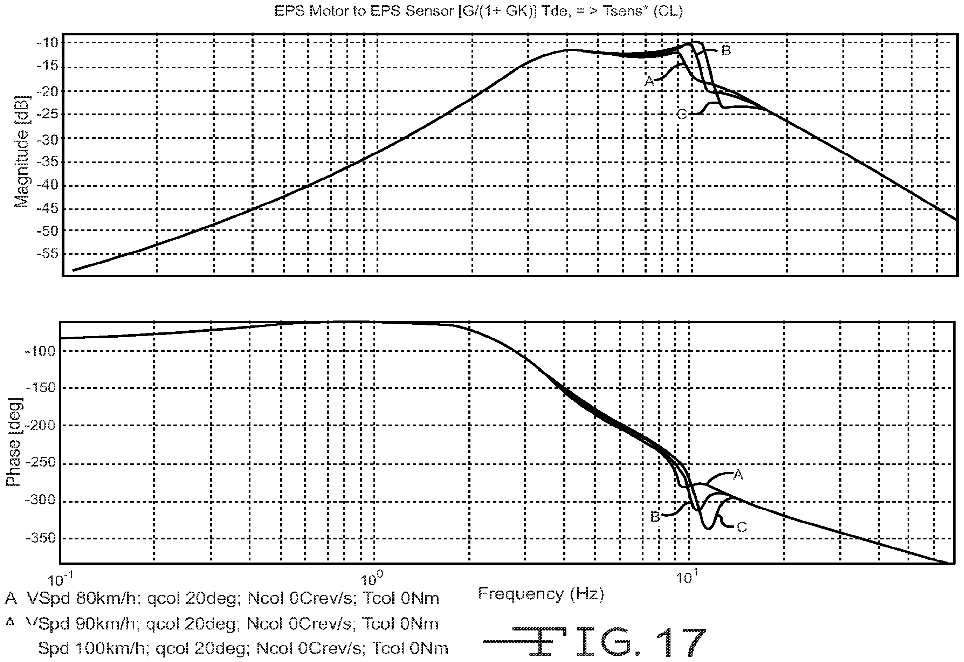

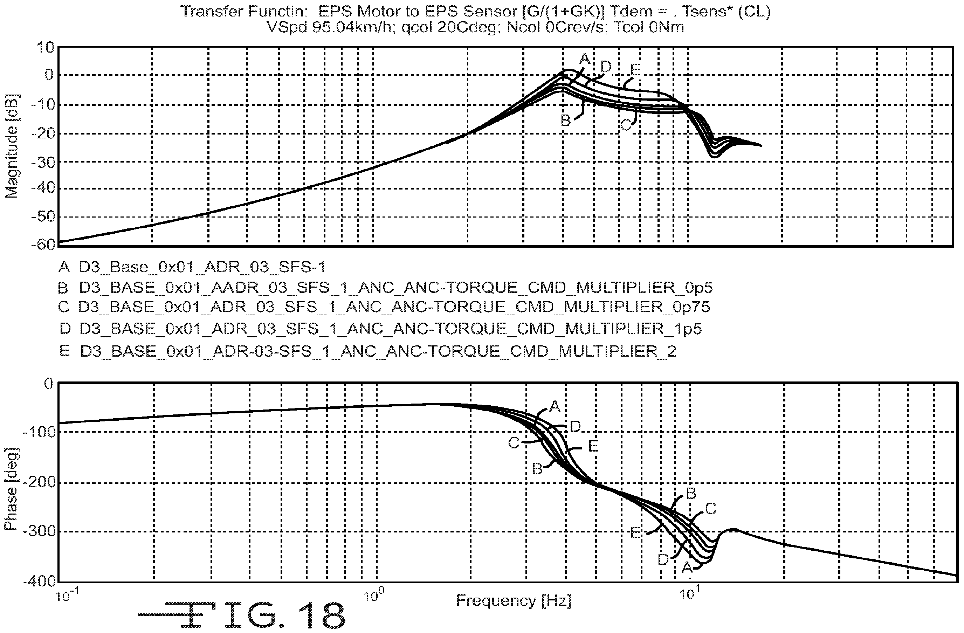

Fig. 17 illustrates the variation of the filter rejection frequency with vehicle speed for both ANC and ADR designs. Fig. 18 illustrates the overall transfer function of the steering system 100 from the steering sensor to the steering assist motor. Changing the rejection gain will only influence the rejection capability of the system and not cause amplification at other frequencies, as occurs in systems using ANC. This is a significant advantage in the system as the tradeoff does not need to be continually tested, as is the case with a system that includes ANC.

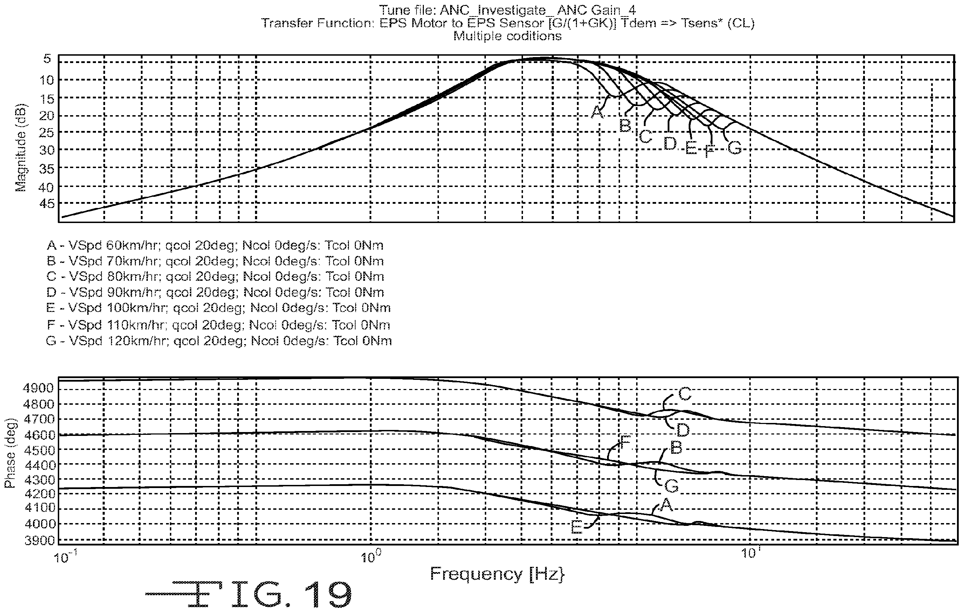

Fig. 19 illustrates the entire transfer function of a steering system with ADR at various vehicle speeds. It is noted that the rejection frequency is related to the vehicle speed. Additionally, the magnitude of disturbance rejection causes no amplification of the output at other frequencies. While it is not shown in Fig. 19, changing the rejection gain will only influence the rejection capability of the system and not cause amplification at other frequencies, as may occur in steering systems equipped with ANC. This is a significant advantage for the steering system as, again, the tradeoff does not need to be continually tested, as is the case with a system that includes ANC.

The use of an anti-notch filter in place of a resonant filter with ADR allows an increase in system gains without the risk of driving the steering system into an unstable condition, as may occur with the use of only a resonator filter. The present invention also avoids the costly time consuming tuning that is required for the prior art system that only use a resonant filter. Similar advantages are realized with the addition of lag-lead compensation to a resonant filter in the ADR.

**Claims**

1. A method for actively canceling steering wheel nibble in an electric power steering system (100) comprising the steps of:

(a) calculating an active nibble canceling torque based upon a detected wheel speed including filtering the wheel speed with a digital filter, wherein the digital filter is an anti-notch filter (104);
(b) using an electric motor in an electric power steering system (100) to apply the active nibble canceling torque to eliminate steering wheel nibble; and
(c) using a lag-lead phase compensator filter (106) concatenated to the anti-notch filter (104), connected between the anti-notch filter (104) and a multiplication block (108), for adding more phase lag to an Active Disturbance Rejection (ADR) (102) dynamic response in order to reduce amplification of a closed loop magnitude of the steering system (100), wherein the phase lag is induced ahead of wheel frequency resonant peaks in order to accumulate enough phase lag as the anti-notch filter (104) reaches wheel frequency peaks, wherein the lag-lead compensator filter (106) is operative as a function of wheel frequency and a damping factor, wherein the phase lag is modified without causing pole-zero cancellation,

wherein poles of the lag-lead compensator filter (106) are shifted to a lower frequency by adding a gain multiplier (K) to initiate the phase lag ahead of the wheel frequencies.

2. A system for actively canceling steering wheel vibrations in an electric power steering system (100) comprising:

an electric motor adapted to provide torque moving a steering system of a vehicle in an intended direction;
a controller for controlling the electric motor, the controller adapted to receive sensor signals from the vehicle and to generate a control signal to cause the electric motor to generate a steering assistance torque;
a digital filter included in the controller, the digital filter operative to generate a wheel vibration canceling signal based upon a detected wheel speed, that causes the electric motor to generate a vibration canceling torque, wherein the digital filter is an anti-notch filter (104) which filters the detected wheel speed;
**characterized by**
a lag-lead phase compensator filter (106) concatenated to the anti-notch filter (104), connected between the anti-notch filter (104) and a multiplication block (108), for adding more phase lag to an Active Disturbance Rejection (ADR) (102) dynamic response in order to reduce amplification of a closed loop magnitude of the steering system (100), wherein the phase lag is induced ahead of wheel frequency resonant peaks in order to accumulate enough phase lag as the anti-notch filter (104) reaches wheel frequency peaks, wherein the lag-lead compensator filter (106) is operative as a function of wheel frequency and a damping factor, wherein the phase lag is modified without causing pole-zero cancellation , wherein poles of the lag-lead compensator filter (106) are shifted to a lower frequency by adding a gain multiplier (K) to initiate the phase lag ahead of the wheel frequencies.

## Patentansprüche

1. Verfahren zur aktiven Aufhebung eines Lenkradzitterns bei einem elektrischen Servolenksystem (100), mit den folgenden Schritten:

(a) Berechnen eines Drehmoments zur aktiven Aufhebung des Zitterns auf der Grundlage einer erfassten Raddrehzahl, einschließlich eines Filterns der Raddrehzahl mit einem digitalen Filter, wobei der digitale Filter ein Anti-Kerbfilter (104) ist;
(b) Verwenden eines Elektromotors in einem elektrischen Servolenksystem (100) zur Aufbringung des Drehmoments zur aktiven Aufhebung des Zitterns, um das Lenkradzittern zu beseitigen; und
(c) Verwenden eines Nacheil-Voreil-Phasenkompensationsfilters (106), der mit dem Anti-Kerbfilter (104) verknüpft und zwischen den Anti-Kerbfilter (104) und einen Multiplikationsblock (108) geschaltet ist, damit einem dynamischen Verhalten einer aktiven Störgrößenkompensation (ADR) (engl. Active Disturbance Rejection) (102) mehr Phasenverzögerung hinzugefügt wird, um eine Verstärkung einer Größe eines Regelkreises des Lenksystems (100) zu reduzieren, wobei die Phasenverzögerung vor Radfrequenzresonanzspitzen induziert wird, um eine ausreichende Phasenverzögerung anzusammeln, wenn der Anti-Kerbfilter (104) Radfrequenzspitzen erreicht, wobei der Nacheil-Voreil-Kompensationsfilter (106) in Abhängigkeit von der Radfrequenz und einem Dämpfungsfaktor wirkt, wobei die Phasenverzögerung modifiziert wird, ohne eine Pol-Nullstellen-Kompensation hervorzurufen, wobei Pole des Nacheil-Voreil-Kompensationsfilters (106) auf eine niedrigere Frequenz verschoben werden, indem ein Verstärkungsmultiplizierer (K) hinzugefügt wird, um die Phasenverzögerung vor den Radfrequenzen einzuleiten.

2. System zur aktiven Aufhebung von Lenkradschwingungen bei einem elektrischen Servolenksystem (100), mit:

einem Elektromotor, der dazu eingerichtet ist, ein Drehmoment bereitzustellen, das ein Lenksystem eines Fahrzeugs in einer vorgesehenen Richtung bewegt;
einer Steuereinheit zur Steuerung des Elektromotors, wobei die Steuereinheit dazu eingerichtet ist, Sensorsignale vom Fahrzeug zu empfangen und ein Steuersignal zu erzeugen, das bewirkt, dass der Elektromotor ein Lenkunterstützungsmoment erzeugt;
einem digitalen Filter, der in der Steuereinheit enthalten ist, wobei der digitale Filter so wirkt, dass er auf der Grundlage einer erfassten Raddrehzahl ein Radschwingungsaufhebungssignal erzeugt, das bewirkt, dass der Elektromotor ein Schwingungsaufhebungsdrehmoment erzeugt, wobei der digitale Filter ein Anti-Kerbfilter (104) ist, der die erfasste Raddrehzahl filtert; **gekennzeichnet durch**

einen Nacheil-Voreil-Phasenkompensationsfilter (106), der mit dem Anti-Kerbfilter (104) verknüpft und zwischen den Anti-Kerbfilter (104) und einen Multiplikationsblock (108) geschaltet ist, damit einem dynamischen Verhalten einer aktiven Störgrößenkompensation (ADR) (engl. Active Disturbance Rejection) (102) mehr Phasenverzögerung hinzugefügt wird, um eine Verstärkung einer Größe eines Regelkreises des Lenksystems (100) zu reduzieren, wobei die Phasenverzögerung vor Radfrequenzresonanzspitzen induziert wird, um eine ausreichende Phasenverzögerung anzusammeln, wenn der Anti-Kerbfilter (104) Radfrequenzspitzen erreicht, wobei der Nacheil-Voreil-Kompensationsfilter (106) in Abhängigkeit von der Radfrequenz und einem Dämpfungsfaktor wirkt, wobei die Phasenverzögerung modifiziert wird, ohne eine Pol-Nullstellen-Kompensation hervorzurufen, wobei Pole des Nacheil-Voreil-Kompensationsfilters (106) auf eine niedrigere Frequenz verschoben werden, indem ein Verstärkungsmultiplizierer (K) hinzugefügt wird, um die Phasenverzögerung vor den Radfrequenzen einzuleiten.

## Revendications

1. Procédé de suppression active du tremblement d'un volant de direction dans un système de direction assistée électrique (100), comprenant les étapes suivantes :

    (a) calculer un couple de suppression active du tremblement sur la base d'une vitesse de rotation de roue détectée, comprenant le filtrage de la vitesse de rotation de roue au moyen d'un filtre numérique, le filtre numérique étant un filtre anti-coupe-bande (104) ;
    (b) utiliser un moteur électrique dans un système de direction assistée électrique (100) pour appliquer le couple de suppression active du tremblement pour éliminer le tremblement du volant de direction ; et
    (c) utiliser un filtre de compensation de phase en retard - en avance (106) qui est concaténé au filtre anti-coupe-bande (104) et est connecté entre le filtre anti-coupe-bande (104) et un bloc de multiplication (108) pour ajouter plus de retard de phase à une réponse dynamique d'un rejet de perturbation actif (ADR) (anglais Active Disturbance Rejection) (102) pour réduire l'amplification d'une grandeur d'une boucle fermée du système de direction (100), le retard de phase étant induit avant des pics de résonance de fréquence de roue pour accumuler un retard de phase suffisant, lorsque le filtre anti-coupe-bande (104) atteint des pics de fréquence de roue, le filtre de compensation de retard - d'avance (106) agissant en fonction de la fréquence de roue et d'un facteur d'affaiblissement, le retard de phase étant modifié sans causer la suppression de pôles et de zéros,

    des pôles du filtre de compensation de retard - d'avance (106) étant décalés vers une fréquence inférieure en ajoutant un multiplicateur de gain (K) afin d'initier le retard de phase avant les fréquences de roue.

2. Système de suppression active des vibrations d'un volant de direction dans un système de direction assistée électrique (100), comprenant :

    un moteur électrique apte à fournir un couple déplaçant un système de direction d'un véhicule dans une direction souhaitée ;
    un appareil de commande pour commander le moteur électrique, l'appareil de commande étant apte à recevoir des signaux de capteur provenant du véhicule et à générer un signal de commande pour amener le moteur électrique à générer un couple d'assistance de direction ;
    un filtre numérique contenu dans l'appareil de commande, le filtre numérique agissant de manière à générer un signal de suppression de vibration de roue sur la base d'une vitesse de rotation de roue détectée, lequel amène le moteur électrique à générer un couple de suppression de vibration, le filtre numérique étant un filtre anti-coupe-bande (104) qui filtre la vitesse de rotation de roue détectée ;
    **caractérisé par**
    un filtre de compensation de phase en retard - en avance (106) qui est concaténé au filtre anti-coupe-bande (104) et est connecté entre le filtre anti-coupe-bande (104) et un bloc de multiplication (108) pour ajouter plus de retard de phase à une réponse dynamique d'un rejet de perturbation actif (ADR) (anglais Active Disturbance Rejection) (102) pour réduire l'amplification d'une grandeur d'une boucle fermée du système de direction (100), le retard de phase étant induit avant des pics de résonance de fréquence de roue pour accumuler un retard de phase suffisant, lorsque le filtre anti-coupe-bande (104) atteint des pics de fréquence de roue, le filtre de compensation de retard - d'avance (106) agissant en fonction de la fréquence de roue et d'un facteur d'affaiblissement, le retard de phase étant modifié sans causer la suppression de pôles et de zéros, des pôles du filtre de compensation de retard - d'avance (106) étant décalés vers une fréquence inférieure en ajoutant un multiplicateur de gain (K) afin d'initier le retard de phase avant les fréquences de roue.

FIG. 1
(PRIOR ART)

FIG. 2
(PRIOR ART)

**FIG. 3**

(PRIOR ART)

**FIG. 4**

(PRIOR ART)

72

Front Wheel Speed

Vehicle Speed

82 — Select Wheel Speed

84 — Filter Speed

86 — Convert To Frequency

80

90 — Tcolumn

Gain Scheduler
1
10 12 20 22

Front Wheel Frequency

X

Nibble Control Gain

96

Tuned Resonator
1
Wn

94

X

Tanc

2π

FRONT WHEEL FREQUENCY

Rad/Sec.

FIG. 5
(PRIOR ART)

1st and 2nd Order Gain Analysis (60 km/h)

FIG. 6

(Prior Art)

EP 2 834 132 B1

Polo-*L*ofo Map

FIG.7

(PRIOR ART)

Tune file: ANC_Investigate_ANC Gain_4
Transfer Function: EPS Motor to EPS Sensor [G/(1+GK) Tdem => Tsens* (CL)
Multiple coditions

A - VSpd 60km/hr; qcol 20deg; Ncol 0deg/s: Tcol 0Nm
B - VSpd 70km/hr; qcol 20deg; Ncol 0deg/s: Tcol 0Nm
C - VSpd 80km/hr; qcol 20deg; Ncol 0deg/s: Tcol 0Nm
D - VSpd 90km/hr; qcol 20deg; Ncol 0deg/s: Tcol 0Nm
E - VSpd 100km/hr; qcol 20deg; Ncol 0deg/s: Tcol 0Nm
F - VSpd 110km/hr; qcol 20deg; Ncol 0deg/s: Tcol 0Nm
G - VSpd 120km/hr; qcol 20deg; Ncol 0deg/s: Tcol 0Nm

FIG. 8
(PRIOR ART)

EP 2 834 132 B1

EP 2 834 132 B1

B

Trensfer Function: EPS Motor to EPS Sensor [G/(1+GK)] Tdem => Tsems* (CL)

Increase the rejection at the
target frequency (12.5 Hz)
increases the potential for
instability at lower
frequencies (9.8 Hz)
Therefor, ANC will always
be a trade off between
improving the nibble rejection
and system instability

A U502_FWD_0x03_R71_SFS_1

B U502_FWD_0x03_R71_SFS_1_ANC_ANC_TORQUE_CMD_MULTIPLIEDR_1p75

C U502_FWD_0x03_R71_SFS_1_ANC_ANC_TORQUE_CMD_MULTIPLIEDR_2

FIG. 9

(Prior Art)

FIG. 10

FIG. 11

Tune file: ANC Investigate ANC Gain 4
Transfer Function: EPS motor to EPS Sensor [(G/(1+GK)] Tdem=>Tsens* (CL)
Multiple conditions

A - VSpd 60km/hr; qcol 20deg; Ncol 0deg/s: Tcol 0Nm
B - VSpd 70km/hr; qcol 20deg; Ncol 0deg/s: Tcol 0Nm
C - VSpd 80km/hr; qcol 20deg; Ncol 0deg/s: Tcol 0Nm
D - VSpd 90km/hr; qcol 20deg; Ncol 0deg/s: Tcol 0Nm
E - VSpd 100km/hr; qcol 20deg; Ncol 0deg/s: Tcol 0Nm
F - VSpd 110km/hr; qcol 20deg; Ncol 0deg/s: Tcol 0Nm
G - VSpd 120km/hr; qcol 20deg; Ncol 0deg/s: Tcol 0Nm

FIG. 12

EP 2 834 132 B1

FIG. 13

FIG. 15

Tune file: ANC Investigate ANC Gain 4
Transfer Function: EPS motor to EPS Sensor [G/(1+GIO)] Tdem=>Tsens* (CL)
Multiple conditions

A - VSpd 60km/hr; qcol 20deg; Ncol 0deg/s: Tcol 0Nm
B - VSpd 70km/hr; qcol 20deg; Ncol 0deg/s: Tcol 0Nm
C - VSpd 80km/hr; qcol 20deg; Ncol 0deg/s: Tcol 0Nm
D - VSpd 90km/hr; qcol 20deg; Ncol 0deg/s: Tcol 0Nm
E - VSpd 100km/hr; qcol 20deg; Ncol 0deg/s: Tcol 0Nm
F - VSpd 110km/hr; qcol 20deg; Ncol 0deg/s: Tcol 0Nm
G - VSpd 120km/hr; qcol 20deg; Ncol 0deg/s: Tcol 0Nm

FIG. 14

Bode Diagram

FIG. 16

A  Anti-Notch filter
B  Phase Compensted Anti-Notch Filter
C  Resonator Filter
D  Phase Compensated Resonator Filter

EP 2 834 132 B1

EPS Motor to EPS Sensor [G/(1+ GK)] Tde, = > Tsens* (CL)

A  VSpd 80km/h; qcol 20deg; Ncol 0Crev/s; Tcol 0Nm
△  VSpd 90km/h; qcol 20deg; Ncol 0Crev/s; Tcol 0Nm
   Spd 100km/h; qcol 20deg; Ncol 0Crev/s; Tcol 0Nm

FIG. 17

Transfer Functin: EPS Motor to EPS Sensor [G/(1+GK)] Tdem = , Tsens* (CL)
VSpd 95.04km/h; qcol 20Cdeg; Ncol 0Crev/s; Tcol 0Nm

A D3_Base_0x01_ADR_03_SFS-1
B D3_BASE_0x01_AADR_03_SFS_1_ANC_ANC-TORQUE_CMD_MULTIPLIER_0p5
C D3_BASE_0x01_ADR_03_SFS_1_ANC_ANC-TORQUE_CMD_MULTIPLIER_0p75
D D3_BASE_0x01_ADR_03_SFS_1_ANC_ANC-TORQUE_CMD_MULTIPLIER_1p5
E D3_BASE_0x01_ADR-03-SFS_1_ANC_ANC-TORQUE_CMD_MULTIPLIER_2

FIG. 18

Tune file: ANC_Investigate_ANC Gain 4
Transfer Function: EPS Motor to EPS Sensor [G/(1+GK)] Tdem => Tsens* (CL)
Multiple coditions

A - VSpd 60km/hr; qcol 20deg; Ncol 0deg/s: Tcol 0Nm
B - VSpd 70km/hr; qcol 20deg; Ncol 0deg/s: Tcol 0Nm
C - VSpd 80km/hr; qcol 20deg; Ncol 0deg/s: Tcol 0Nm
D - VSpd 90km/hr; qcol 20deg; Ncol 0deg/s: Tcol 0Nm
E - VSpd 100km/hr; qcol 20deg; Ncol 0deg/s: Tcol 0Nm
F - VSpd 110km/hr; qcol 20deg; Ncol 0deg/s: Tcol 0Nm
G - VSpd 120km/hr; qcol 20deg; Ncol 0deg/s: Tcol 0Nm

Magnitude (dB)

Phase (deg)

Frequency [Hz]

FIG. 19

24

**EP 2 834 132 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2030868 A1
- WO 2006099483 A